(19) Europäisches Patentamt
European Patent Office
Office européen des brevets

(11) **EP 4 123 253 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **21186662.9**

(22) Anmeldetag: **20.07.2021**

(51) Internationale Patentklassifikation (IPC):
*F28D 20/02* *(2006.01)*    *H01M 50/50* *(2021.01)*
*F28D 21/00* *(2006.01)*    *H05K 7/20* *(2006.01)*
*H01F 27/08* *(2006.01)*    *B60L 53/16* *(2019.01)*

(52) Gemeinsame Patentklassifikation (CPC):
**F28D 20/021; B60L 53/302;** F28D 2021/0029

(54) **MEHRSCHICHTIGER LATENTWÄRMESPEICHER**

MULTI-LAYER LATENT HEAT STORAGE

STOCKAGE THERMIQUE LATENT À PLUSIEURS COUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2023 Patentblatt 2023/04**

(73) Patentinhaber: **Rosenberger Hochfrequenztechnik GmbH & Co. KG 84526 Tittmoning (DE)**

(72) Erfinder:
• **KOLEBER, Alexander 84526 Tittmoning (DE)**
• **WINTERHOLLER , Waldemar 83301 Traunreut (DE)**

(74) Vertreter: **Warneke, Nicola Kanzlei Warneke Rechts- und Patentanwälte Leonrodstraße 11 83278 Traunstein (DE)**

(56) Entgegenhaltungen:
DE-A1-102009 040 147    DE-A1-102017 222 243
DE-A1-102018 214 792    DE-U1-202020 002 915
US-B2- 10 644 439

## Beschreibung

GEBIET DER ERFINDUNG

Die vorliegende Erfindung betrifft einen Latentwärmespeicher.

TECHNISCHER HINTERGRUND

Die EP 3 433904 B1 zeigt einen Latentwärmespeicher für eine HV-Komponente.

Die DE 10 2009 040147 A1 zeigt einen elektrochemischen Energiespeicher zur Montage in einem Gehäuse mit wenigstens zwei Latentwärmespeicherelementen, und wenigstens einem Wärmetransportmittel.

DE 20 2020 002915 U1 zeigt eine Kühlvorrichtung mit Latentwärmespeicher für einen elektrischen Leiter gemäß dem Oberbegriff von Anspruch 1.

ZUSAMMENFASSUNG DER ERFINDUNG

Vor diesem Hintergrund liegt der Erfindung die Aufgabe zugrunde, die Wärmespeicherkapazität eines Latentwärmespeichers zu vergrößern.

Erfindungsgemäß wird diese Aufgabe durch einen Latentwärmespeicher mit den Merkmalen des Patentanspruchs 1 gelöst.

Bei der Sandwichbauweise werden Werkstoffe mit verschiedenen Eigenschaften in Schichten zu einem Bauteil zusammengesetzt.

Ein Latentwärmespeicher (auch Phasenwechsel- oder PCM-Speicher) ist ein Wärmespeicher, der einen Großteil der ihm zugeführten thermischen Energie in Form von latenter Wärme (z.B. für einen Phasenwechsel von fest zu flüssig) speichert.

Die gespeicherte Wärme ist verborgen, da, solange die Phasenumwandlung nicht ganz abgeschlossen ist, die Temperatur eines Stoffes trotz Wärmezufuhr nicht weiter ansteigt. Latentwärmespeicher können daher in einem kleinen Temperaturbereich rund um den Phasenwechsel sehr große Wärmemengen speichern. Da viele Stoffe mit unterschiedlichsten Schmelzpunkten als Phasenwechselmaterial in Frage kommen, können viele Speicheranwendungen vom Kälte- bis zum Hochtemperaturwärmespeicher mit dieser Technik abgedeckt werden.

Ein Latentwärmespeicherelement enthält ein Phasenwechselmaterial. Es kann vorgesehen sein, dass dem Phasenwechselmaterial weitere Materialkomponenten beigemischt sind, um andere Eigenschaften des Latentwärmespeicherelements zu gewährleisten. Ein Beispiel für ein geeignetes Phasenwechselmaterial ist Paraffin. Um zu verhindern, dass das Latentwärmespeicherelement während dem Betrieb seine Festigkeit verliert und/oder um die Wärmeleitfähigkeit des Phasenwechselmaterials zu verbessern, kann dem Phasenwechselmaterial, z.B. Graphit, beigemischt werden. Bei einem entsprechenden Mischungsverhältnis verflüssigt sich das Latentwärmespeicherelement dann nicht, sondern geliert. Ferner verbessert Graphit in Paraffin den Wärmetransport in einem Phasenwechselmaterial mit einem Graphit-Paraffin-Gemisch.

Ein Gel ist ein disperses System, das aus mindestens zwei Komponenten besteht. Die feste Komponente bildet dabei ein schwammartiges, dreidimensionales Netzwerk, dessen Poren durch eine Flüssigkeit oder ein Gas ausgefüllt sind. Die flüssige Komponente ist dadurch in der festen immobilisiert.

Die grundlegende Idee der Erfindung ist es, wenigstens zwei Latentwärmespeicherelemente, sandwichartig übereinander zu schichten, wobei die Latentwärmespeicherelemente jeweils ein Wärmetransportmittel, welches Wärme aus einem elektrischen Leiter ableitet, berühren. Dabei kann auch vorgesehen sein, dass die Latentwärmespeicherelemente ein identisches Wärmetransportmittel berühren, wenn das Wärmetransportmittel zwischen zwei Latentwärmespeicherelementen angeordnet ist und mit einem elektrischen Leiter, von dem Wärme abzuführen ist, elektrisch verbunden ist.

Alternativ können auch wenigstens zwei Wärmetransportmittel vorgesehen sein. Dabei ist ein erstes Wärmetransportmittel mit einem wärmeführenden elektrischen Leiter elektrisch verbunden. Das zweite Wärmetransportmittel ist mit dem ersten Wärmetransportmittel elektrisch leitend verbunden und somit mit dem wärmeführenden elektrischen Leiter indirekt verbunden. Folglich wird die Wärme aus dem wärmeführenden elektrischen Leiter in die Wärmetransportmittel abgeführt. Die Wärmetransportmittel wiederum führen die Wärme in die berührenden Latentwärmespeicherelemente ab.

Dementsprechend wird die Wärmeenergie aus dem Wärmetransportmittel in Form von Energie für einen Phasenwechsel, beispielsweise Schmelzenergie, in dem Latentwärmespeicherelement gespeichert.

Somit lässt sich die Wärmekapazität eines Latentwärmespeicherelements in etwa verdoppeln, wenn der Latentwärmespeicher zwei Latentwärmespeicherelemente aufweist.

Dementsprechend können die Latentwärmespeicherelemente zwischen mehreren Wärmetransportmitteln angeordnet sein, oder alternativ kann auch ein Wärmetransportmittel zwischen zwei Latentwärmespeicherelementen angeordnet sein.

Da der gelierte Zustand des Latentwärmespeicherelements nicht über eine beliebige Höhe (während anzustrebender Betriebszeiten) erreichbar ist, lässt sich eine Vergrößerung der Wärmespeicherkapazität in erster Linie über eine Vergrößerung der ein Wärmetransportmittel berührenden Oberfläche eines Latentwärmespeicherelements gewährleisten.

Als Gehäuse eignet sich jede feste Hülle, die den Latentwärmespeicher bei dessen Betriebstemperatur begrenzt. Dementsprechend kann der Latentwärmespeicher in ein Gehäuse einer übergeordneten Komponente eingesetzt sein, der Latentwärmespeicher kann von einem eigenen Gehäuse umschlossen sein oder von einem geeigneten Material mit ausreichender Wärmebeständigkeit und Festigkeit umspritzt sein.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Weiterbildung der Erfindung weist der Latentwärmespeicher zwei Wärmetransportmittel auf, wobei die beiden Latentwärmespeicherelemente zwischen den beiden Wärmetransportmitteln angeordnet sind.

Hieraus ergibt sich folgender Schichtaufbau: Wärmetransportmittel-Latentwärmespeicherelement-Latentwärmespeicherelement-Wärmetransportmittel.

Bei diesem Aufbau ist es vorteilhaft, wenn das erste Wärmetransportmittel eine Eingangsschnittstelle zu einem wärmeführenden elektrischen Leiter bildet und das zweite Wärmetransportmittel eine Ausgangsschnittstelle zu dem wärmeführenden elektrischen Leiter, z.B. Kontaktstifte, aufweist.

Dementsprechend ist der wärmeführende elektrische Leiter von dem Latentwärmespeicher unterbrochen bzw. überbrückt und weist zumindest zwei Bestandteile, nämlich einen Abschnitt, der sich zu der Eingangsschnittstelle hin erstreckt, sowie einen weiteren Abschnitt, der von der Ausgangsschnittstelle wegführt, auf.

Wenngleich der elektrische Leiter mehrere Abschnitte bzw. Bestandteile, z.B. Stromschienen und Kontaktstifte, aufweisen kann, ist in dieser Patentanmeldung dennoch von einem elektrischen Leiter die Rede.

Alternativ ist es auch denkbar, dass das zweite Wärmetransportmittel zwischen den Latentwärmespeicherelementen angeordnet ist. In diesem Fall ergibt sich folgender Aufbau: Wärmetransportmittel-Latentwärmespeicherelement-Wärmetransportmittel-Latentwärmespeicherelement.

In diesem Fall ist das Wärmetransportmittel, welches zwischen den Latentwärmespeicherelementen angeordnet ist, anderweitig mit dem wärmeführenden elektrischen Leiter elektrisch zu verbinden.

Gemäß einer bevorzugten Weiterbildung der Erfindung umfasst der Latentwärmespeicher eine kompressible Schicht, die eingerichtet ist, die Schichten in einem Gehäuse und/oder zwischen Wärmetransportmitteln zu fixieren, wobei die kompressible Schicht aufgrund einer Wärmeausdehnung der Latentwärmespeicherelemente mit steigender Temperatur der Latentwärmespeicherelemente komprimiert wird und sich aufgrund seiner Elastizität mit sinkender Temperatur der Latentwärmespeicherelemente ausdehnt.

Demnach ist die kompressible Schicht derart dimensioniert, dass die Latentwärmespeicherelemente von der kompressiblen Schicht bei einer Temperatur, die geringer ist als die Betriebstemperatur des Latentwärmespeichers, an die Wärmetransportmittel gedrückt werden. Dehnen sich die Latentwärmespeicherelemente während des Betriebs des Latentwärmespeichers aus, so wird die kompressible Schicht aufgrund der Wärmeausdehnung der Latentwärmespeicherelemente komprimiert.

Somit sind die Latentwärmespeicherelemente auch bei Temperaturen unterhalb der Betriebstemperatur des Latentwärmespeichers gegen ein Verrutschen innerhalb des Gehäuses gesichert. Darüber hinaus dämpft die kompressible Schicht aufgrund ihrer Elastizität auch Vibrationen.

Gemäß einer bevorzugten Weiterbildung der Erfindung weist das Wärmetransportmittel eine metallische Platte auf. Vorzugsweise entspricht die Fläche der metallischen Platte einer Oberfläche des Latentwärmespeicherelements.

Es versteht sich, dass alternativ auch vorgesehen sein kann, die Wärme nicht flächig in das Latentwärmespeicherelement einzuleiten, sondern lokal oder punktuell. Flächig bedeutet das bei einem quaderförmigen Latentwärmespeicherelement die Wärme über die gesamte Oberfläche einer Seite des Latentwärmespeicherelements eingeführt wird.

Dabei ist es weiter zweckmäßig, wenn das Wärmetransportmittel eine wärmeleitende Schicht aufweist, die auf die metallische Platte aufgebracht ist und die eingerichtet ist, Lufteinschlüsse aufzufüllen. Die wärmeleitende Schicht kann beispielsweise als flexible oder aushärtende Paste, zum Beispiel Silikonpaste, die zugesetzte Komponenten aufweisen kann, ausgebildet sein.

Unter einer wärmeleitenden Schicht wird ein Werkstoff verstanden, der eine bessere Wärmeleitfähigkeit als Luft aufweist, dessen Hauptfunktion die Wärmeübertragung zwischen Substanzen oder Komponenten ist und der über die gesamte Oberfläche des Latentwärmespeicherelements bzw. der metallischen Platte aufgebracht ist.

Gemäß einer bevorzugten Weiterbildung der Erfindung sind die Wärmetransportmittel mittels wenigstens einer elektrisch leitenden Stütze elektrisch verbunden und aneinander abgestützt. Dementsprechend gewährleistet die Stütze eine Übertragung von Wärme und Strom zwischen dem Wärmetransportmittel und gewährleistet bzw. verbessert, deren mechanische Stabilität. Die mechanische Stabilität der beiden Wärmetransportmittel lässt sich insbesondere gewährleisten, indem die Wärmetransportmittel mittels dreier Stützen verbunden sind. Es versteht sich, dass drei elektrisch leitende Stützen hinsichtlich der Wärmeleitfähigkeit und der elektrischen Leitfähigkeit vorteilhaft sind, jedoch lässt sich mechanische Stabilität auch mittels einer elektrisch leitenden Stütze und zwei weiteren nichtleitenden Stützen herstellen.

Gemäß einer bevorzugten Weiterbildung der Erfindung sind wenigstens zwei Wärmetransportmittel des Latentwärmespeichers eingerichtet, mit einem elektrischen Leiter, dessen Wärme von dem Latentwärmespeicher abzuführen ist, verbunden zu werden.

Dementsprechend kann vorgesehen sein, dass die Wärmetransportmittel Aussparungen, zum Beispiel Bohrungen, aufweisen, um elektrische Leiter, deren Wärme abzuführen ist, aufzunehmen. Somit ist eine besonders effektive Wärmeabführung durch das Wärmetransportmittel gewährleistet.

Gemäß einer bevorzugten Weiterbildung der Erfindung weist ein Latentwärmespeicher mehrere Paare von Latentwärmespeicherelementen, die jeweils zwischen zwei Wärmetransportmitteln angeordnet sind, auf.

Dabei kann zusätzlich vorgesehen sein, dass weitere Latentwärmespeicherelemente zwischen einem Gehäuse und einem Wärmetransportmittel ausgebildet sind.

Gemäß einer bevorzugten Weiterbildung der Erfindung weisen die Latentwärmespeicherelemente wenigstens zwei Materialkomponenten auf, deren Anteile derart eingestellt sind, dass die Latentwärmespeicherelemente bei einer Betriebstemperatur einen gelierten Zustand aufweisen.

Es versteht sich, dass ein Steckverbinder, insbesondere eine Ladedose, mit wenigstens einem elektrischen Leiter, der mit einem Latentwärmespeicher nach einem der vorstehenden Ansprüche verbindbar ist, derart dass Wärme von dem elektrischen Leiter in den Latentwärmespeicher abgeführt wird, wobei eine Eingangs- und/oder eine Ausgangsschnittstelle als Press- und/oder Schraubverbindung zwischen dem an einer Schnittstelle verbundenen elektrischen Leiter und jeweils einer der Wärmetransportmittel ausgebildet ist, vorteilhaft ist.

Es versteht sich, dass ein Kit zur Montage eines Latentwärmespeichers wie er vorstehend beschrieben wurde, mit einem Gehäuse zur Aufnahme einer vorbestimmten Anzahl an Paaren an Latentwärmespeicherelementen, der entsprechenden Anzahl an Paaren an Latentwärmespeicherelementen und einer korrespondierenden Anzahl an Wärmetransportmitteln, derart dass derart viele Wärmetransportmittel vorhanden sind, dass ein paar an Latentwärmespeicherelementen zwischen zwei Wärmetransportmitteln anordenbar ist, vorteilhaft ist.

Dementsprechend kann vorgesehen sein, dass jedem Latentwärmespeicherelement ein Wärmetransportmittel zugeordnet ist oder vorteilhaft, dass sich die Anzahl der Wärmetransportmittel ergibt aus der Formel

$$\frac{\text{Anzahl der Latentwärmespeicherelemente}}{2} + 1.$$

Dementsprechend lässt sich das Kit für einen beschriebenen Latentwärmespeicher auf eine beliebige Anzahl an Latentwärmespeicherelementen dimensionieren. Somit lässt sich die Wärmespeicherkapazität eines Latentwärmespeichers bei vorhandenem Bauraum nahezu beliebig einstellen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:

Fig. 1    eine Perspektivansicht einer Ausführungsform der Erfindung;

Fig. 2    eine schematische Perspektivansicht in einer Schnittdarstellung gemäß einer Ausführungsform der Erfindung;

Fig. 3    eine schematische Perspektivansicht gemäß einer Ausführungsform der Erfindung;

Fig. 4    eine schematische Perspektivansicht einer Ausführungsform der Erfindung;

Fig. 5    eine schematische Perspektivansicht von Komponenten gemäß einer Ausführungsform der Erfindung;

Fig. 6    schematische Schnittsicht einer elektrischen Komponente gemäß einer Ausführungsform der Erfindung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen. Im Folgenden werden die Figuren zusammenhängend und übergreifend beschrieben.

BESCHREIBUNG VON AUSFÜHRUNGSBEISPIELEN

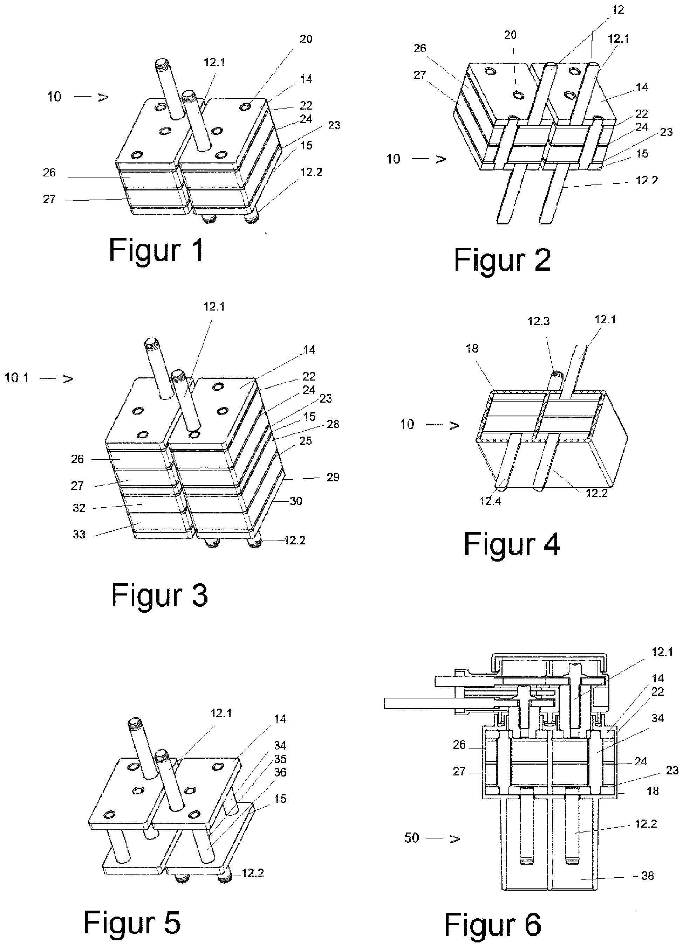

Figur 1 zeigt eine schematische Perspektivansicht eines Paares von Latentwärmespeichern 10. Der Einfachheit halber sind Bezugzeichen in den Zeichnungen nur einfach auf jeweils einer Seite eines Leiters des Leiterpaars 12 angegeben.

Der Latentwärmespeicher 10 ist mit mehreren Abschnitten 12.1, 12.2, 12.3, 12.4 von Leitern eines Leiterpaars 12 verbunden. Das Leiterpaar 12 umfasst einen ersten Leiter mit Abschnitten 12.1 und 12.2 sowie einen zweiten Leiter, der auch zwei Abschnitte aufweist. Der Latentwärmespeicher 10 ist für die beiden Leiter des Leiterpaares 12 baugleich ausgebildet.

Der erste Abschnitt 12.1, des elektrischen Leiters ist mit einem Wärmetransportmittel, das als Metallplatte 14 ausgebildet ist, mittels einer Pressverbindung verbunden. Somit wird elektrischer Strom und Wärme von dem ersten Abschnitt des Leiters 12.1 auf die Metallplatte 14 übertragen. Die Schnittstelle, also die Pressverbindung, zwischen dem ersten Abschnitt 12.1 des elektrischen Leiters und der Metallplatte 14 bildet eine Eingangsschnittstelle. Die Metallplatte 14 weist vier Bohrungen auf, wovon eine Bohrung des ersten Abschnittes 12.1 des elektrischen Leiters belegt ist. Die drei verbleibenden Bohrungen sind von Stützen 34, 35, 36 (in Figur 1 nicht dargestellt) belegt, indem sich die Stützen zwischen der Metallplatte 14 und der Metallplatte 15 erstrecken.

Auf der Unterseite der Metallplatte 14, d.h. die Seite, die zu dem Latentwärmespeicherelement gewandt ist, ist eine wärmeleitende Paste 22 aufgebracht, die Lufteinschlüsse zwischen der Metallplatte 14 und dem Latentwärmespeicherelement 26 ausfüllt. Die wärmeleitfähige Paste 22 ist wärmeleitfähiger als Luft, sodass die Paste 22 hinsichtlich der Wärmeleitfähigkeit zwischen der Metallplatte 14 und dem Latentwärmespeicherelement 26 eine Verbesserung gewährleistet. Zwischen den beiden Metallplatten 14 und 15 ist ein weiteres Latentwärmespeicherelement 27 angeordnet. Zwischen den Latentwärmespeicherelementen 26 und 27 ist eine kompressible Schicht 24 angeordnet, die die Latentwärmespeicherelemente 26 und 27 gegen die Metallplatten 14 und 15 und insbesondere gegen ein Gehäuse 18 (in Figur 1 nicht dargestellt) drückt. Dehnen sich die Komponenten des Latentwärmespeichers 10 aufgrund von Wärmeausdehnung aus, wird die kompressible Schicht 24 entsprechend komprimiert. Zwischen der Metallplatte 15 und dem Latentwärmespeicherelement 27 ist eine weitere Schicht wärmeleitfähige Paste 23 aufgebracht.

Figur 2 zeigt eine perspektivische Schnittsicht eines Paares von Latentwärmespeichern 10 ähnlich zu Figur 1. Figur 2 stellt ferner die Stütze 36 dar, die sich zwischen den Metallplatten 14 und 15 erstreckt. Die Stütze 36 ist mit den Metallplatten 14 und 15 über je eine Pressverbindung verbunden.

Figur 3 zeigt eine weitere schematische Perspektivansicht eines Paares von Latentwärmespeichern 10.1. Der Latentwärmespeicher 10.1 umfasst vier Latentwärmespeicherelemente, 26, 27, 32, 33 für jeden elektrischen Leiter des Leiterpaares 12. Dementsprechend weist der Latentwärmespeicher gemäß Figur 3 acht Latentwärmespeicherelemente auf.

Aus der Formel

$$\frac{Anzahl\ der\ Latentwärmespeicherelemente}{2} + 1,$$

ergibt sich, dass der Latentwärmespeicher 10.1 drei Metallplatten 14, 15, 30, aufweist.

Zur besseren Darstellung ist das Gehäuse 18 in den Latentwärmespeichern 10 und 10.1 gemäß der Figuren 1-3 ausgeblendet.

Figur 4 zeigt eine Perspektivansicht in einer Schnittdarstellung eines Latentwärmespeichers 10 gemäß Figur 1. In Figur 4 ist zudem ein Gehäuse 18, welches die Komponenten des Latentwärmespeichers umschließt, dargestellt. Aus Figur 4 wird ersichtlich, dass die Abschnitte 12.1, 12.2, 12.3 und 12.4 der elektrischen Leiter nicht durch eine gemeinsame Ebene verlaufen müssen. Die Abschnitte 12.1 und 12.3 der Eingangsschnittstelle können anwendungsspezifisch in einer von mehreren Bohrungen der Metallplatten 14 belegen. Dementsprechend können auch die Abschnitte 12.2 und 12.4 der Ausgangsschnittstelle eine beliebige Bohrung der Metallplatten 15 belegen, d.h. die Abschnitte des elektrischen Leiters der Eingangs- bzw. Ausgangsschnittstelle müssen nicht zwingend in gegenüberliegende Bohrungen eingesetzt sein.

Figur 5 zeigt eine perspektivische Ansicht mehrerer Komponenten eines Latentwärmespeichers. In Figur 5 sind lediglich die Abschnitte der elektrischen Leiter 12.1 und 12.2, die Metallplatten 14 und 15 sowie drei Stützen 34, 35, 36 dargestellt. Um die Stützen 34-36 zwischen den Metallplatten 14 und 15 darzustellen, sind die Latentwärmespeicherelemente 26, 27 in Figur 5 nicht dargestellt.

Figur 6 zeigt eine elektronische Komponente 50 mit einem Latentwärmespeicher 10, wie er vorstehend beschrieben wurde. Die elektronische Komponente 50 umfasst ein Leiterpaar 12 mit einem Leiter, der einen ersten Abschnitt 12.1 zu einer Eingangsschnittstelle des Latentwärmespeichers 10 aufweist, und einem zweiten Abschnitt 12.2 der eine Ausgangsschnittstelle zu dem Latentwärmespeicher 10 bildet. Der erste Abschnitt des elektrischen Leiters ist als Stromschiene ausgebildet. Der zweite Abschnitt 12.2 des elektrischen Leiters ist als Kontaktstiftpaar eines männlichen Steckverbinders 38 ausgebildet. Der männliche Steckverbinder 38 bildet eine sogenannte Ladedose, die sich zum Aufladen einer Batterie mit einem weiblichen Steckverbinder verbinden lässt.

Obwohl die vorliegende Erfindung anhand bevorzugter Ausführungsbeispiele vorstehend vollständig beschrieben wurde, ist sie darauf nicht beschränkt, sondern im Rahmen der Ansprüche auf vielfältige Art und Weise modifizierbar.

BEZUGSZEICHENLISTE

| | |
|---|---|
| 10 | Latentwärmespeicher |
| 10.1 | Latentwärmespeicher |
| 12 | Leiterpaar |
| 12.1 | erster Abschnitt |
| 12.2 | zweiter Abschnitt |
| 14 | Metallplatte |
| 15 | Metallplatte |
| 18 | Gehäuse |
| 20 | Bohrung |
| 22 | wärmeleitfähige |
| 23 | wärmeleitfähige Paste |
| 24 | kompressible Schicht |
| 26 | Latentwärmespeicherelement |
| 27 | Latentwärmespeicherelement |
| 28 | wärmeleitfähige Paste |
| 29 | wärmeleitfähige Paste |
| 30 | Metallplatte |
| 32 | Latentwärmespeicherelement |
| 33 | Latentwärmespeicherelement |
| 34 | Stütze |
| 35 | Stütze |
| 36 | Stütze |
| 38 | Steckverbinder |
| 50 | elektrische Komponente |

**Patentansprüche**

1. Latentwärmespeicher (10; 10.1) für einen elektrischen Leiter (12) zur Montage in einem Gehäuse (18) mit

   - wenigstens zwei Latentwärmespeicherelementen (26, 27; 32, 33),
   - wenigstens einem Wärmetransportmittel, welches Wärme aus dem elektrischen Leiter ableitet, insbesondere wenigstens zwei Wärmetransportmitteln, die miteinander elektrisch leitend verbunden sind,

   **dadurch gekennzeichnet, dass**
   die Latentwärmespeicherelemente (26, 27; 32, 33) und das Wärmetransportmittel in Schichten angeordnet sind, derart, dass die Latentwärmespeicherelemente an jeweils wenigstens einer Oberflächenseite von dem Wärmetransportmittel berührt werden, so dass Wärme von dem Wärmetransportmittel in ein berührendes Latentwärmespeicherelement geleitet wird.

2. Latentwärmespeicher nach Anspruch 1, welcher zwei Wärmetransportmittel aufweist, wobei die beiden Latentwärmespeicherelemente (26, 27) zwischen den beiden Wärmetransportmitteln angeordnet sind.

3. Latentwärmespeicher nach einem der vorstehenden Ansprüche, wobei der Latentwärmespeicher eine kompressible Schicht (24; 25) aufweist, die eingerichtet ist, die Latentwärmespeicherelemente (26, 27; 32, 33) in einem Gehäuse und/oder zwischen wenigstens zwei Wärmetransportmitteln zu fixieren, wobei die kompressible Schicht (24; 25) aufgrund einer Wärmeausdehnung der Latentwärmespeicherelemente mit steigender Temperatur der Latentwärmespeicherelemente komprimiert wird und sich aufgrund seiner Elastizität mit sinkender Temperatur der Latentwärmespeicherelemente ausdehnt.

4. Latentwärmespeicher nach einem der vorstehenden Ansprüche, wobei die Wärmetransportmittel eine Metallplatte (14, 15, 30) aufweisen.

5. Latentwärmespeicher nach Anspruch 4, wobei das Wärmetransportmittel eine wärmeleitende Schicht (22, 23; 28, 29) aufweist, die auf die Metallplatte (14, 15, 30) aufgebracht ist und die eingerichtet ist, Lufteinschlüsse zwischen der metallischen Platte und einem Latentwärmespeicherelement aufzufüllen.

6. Latentwärmespeicher nach einem der vorstehenden Ansprüche, wobei die Wärmetransportmittel mittels wenigstens einer, insbesondere mittels dreier, elektrisch leitender Stützen (34, 35, 36) elektrisch verbunden und aneinander abgestützt sind.

7. Latentwärmespeicher nach einem der vorstehenden Ansprüche, wobei wenigstens zwei Wärmetransportmittel des Latentwärmespeichers (10; 10.1) eingerichtet sind, mit einem elektrischen Leiter (12, 12.1, 12.2), dessen Wärme mittels des Latentwärmespeichers abzuführen ist, elektrisch verbunden zu werden.

8. Latentwärmespeicher nach einem der vorstehenden Ansprüche, welcher mehrere Paare von Latentwärmespeicherelementen (26, 27; 32, 33), die jeweils zwischen zwei Wärmetransportmitteln angeordnet sind, aufweist.

9. Latentwärmespeicher nach einem der vorstehenden Ansprüche, wobei die Latentwärmespeicherelemente (26, 27; 32, 33) wenigstens zwei Materialbestandteile aufweisen, deren Anteile derart eingestellt sind, dass die Latentwärmespeicherelemente bei einer Betriebstemperatur einen gelierten Zustand aufweisen.

10. Steckverbinder (38), insbesondere Ladedose, mit wenigstens einem elektrischen Leiter (12), der mit einem Latentwärmespeicher nach einem der vorstehenden Ansprüche an einer Eingangsschnittstelle und an eine Ausgangsschnittstelle verbunden ist, derart dass Wärme von dem elektrischen Leiter (12) in den Latentwärmespeicher (10; 10.1) abgeführt wird, wobei die Eingangs-, und/oder die Ausgangsschnittstelle als Press-, oder Schraubverbindung zwischen dem an einer Eingangsschnittstelle und an einer Ausgangsschnittstelle elektrischen Leiter und jeweils einer der Wärmetransportmittel ausgebildet ist.

**Claims**

1. A latent heat accumulator (10; 10.1) for an electrical conductor (12) to be mounted in a housing (18) having

   - at least two latent heat accumulator elements (26, 27; 32, 33),
   - at least one heat transport medium, which dissipates heat from the electrical conductor, in particular at least two heat transport media, which are electrically conductively connected to one another,

   **characterized in that**
   the latent heat accumulator elements (26, 27; 32, 33) and the heat transport medium are arranged in layers, in such a manner that the latent heat accumulator elements are touched by the heat transport medium on in each case at least one surface side, so that heat is conducted from the heat transport medium into a touching latent heat accumulator element.

2. The latent heat accumulator according to claim 1, which has two heat transport media, wherein the two latent heat accumulator elements (26, 27) are arranged between the two heat transport media.

3. The latent heat accumulator according to any one of the preceding claims, wherein the latent heat accumulator has a compressible layer (24; 25), which is configured to fix the latent heat accumulator elements (26, 27; 32, 33) in a housing and/or between at least two heat transport media, wherein the compressible layer (24; 25) is compressed due to a heat expansion of the latent heat accumulator elements with increasing temperature of the latent heat accumulator elements and is expanded due to its elasticity with decreasing temperature of the latent heat accumulator elements.

4. The latent heat accumulator according to any one of the preceding claims, wherein the heat transport media have a metal plate (14, 15, 30).

5. The latent heat accumulator according to claim 4, wherein the heat transport medium has a heat-conductive layer (22, 23; 28, 29), which is applied to the metal plate (14, 15, 30) and which is configured to fill air pockets between the metallic plate and a latent heat accumulator element.

6. The latent heat accumulator according to any one of the preceding claims, wherein the heat transport media are electrically connected by means of at least one, in particular by means of three, electrically conductive supports (34, 35, 36) and are supported against one another.

7. The latent heat accumulator according to any one of the preceding claims, wherein at least two heat transport media of the latent heat accumulator (10; 10.1) are configured to be electrically connected to an electrical conductor (12, 12.1, 12.2), the heat of which is to be dissipated by means of the latent heat accumulator.

8. The latent heat accumulator according to any one of the preceding claims, which has several pairs of latent heat accumulator elements (26, 27; 32, 33), which are each arranged between two heat transport media.

9. The latent heat accumulator according to any one of the preceding claims, wherein the latent heat accumulator elements (26, 27; 32, 33) have at least two material components, the share of which is set in such a manner that the latent heat accumulator elements have a gelled state at an operating temperature.

10. A plug connector (38), in particular a charging socket, having at least one electrical conductor (12), which is connected to a latent heat accumulator according to any one of the preceding claims at an input interface and at an output interface, in such a manner that heat is dissipated from the electrical conductor (12) into the latent heat accumulator (10; 10.1), wherein the input and/or the output interface is designed as a press-fit or screw connection between the electrical conductor at an input interface and at an output interface and in each case one of the heat transport media.

**Revendications**

1. Accumulateur de chaleur latente (10 ; 10.1) pour un conducteur électrique (12) destiné à être monté dans un boîtier (18), avec

- au moins deux éléments d'accumulateur de chaleur latente (26, 27 ; 32, 33),
- au moins un moyen de transport de chaleur qui dérive de la chaleur du conducteur électrique, plus particulièrement au moins deux moyens de transport de chaleur qui sont reliés entre eux de manière électro-conductrice,

**caractérisé en ce que**
les éléments d'accumulateur de chaleur latente (26, 27 ; 32, 33) et le moyen de transport de chaleur sont disposés par couches, de façon à ce que les éléments d'accumulateur de chaleur latente entrent en contact avec le moyen de transport de chaleur au niveau d'au moins un côté de la surface, de façon à ce que la chaleur provenant du moyen de transport de chaleur soit guidée vers un élément d'accumulateur de chaleur latente en contact.

2. Accumulateur de chaleur latente selon la revendication 1,
qui comprend deux moyens de transport de chaleur, dans lequel les deux éléments d'accumulateur de chaleur latente (26, 27) sont disposés entre les deux moyens de transport de chaleur.

3. Accumulateur de chaleur latente selon l'une des revendications précédentes,
dans lequel l'accumulateur de chaleur latente comprend une couche compressible (24 ; 25) qui est conçue pour fixer les éléments d'accumulateur de chaleur latente (26, 27 ; 32, 33) dans un boîtier et/ou entre au moins deux moyens de transport de chaleur, dans lequel la couche compressible (24 ; 25) est comprimée, du fait d'une dilatation thermique des éléments d'accumulateur de chaleur latente lorsque la température des éléments d'accumulateur de chaleur latente augmente et est dilatée, du fait de son élasticité, lorsque la température des éléments d'accumulateur de chaleur latente diminue.

4. Accumulateur de chaleur latente selon l'une des revendications précédentes,
dans lequel les moyens de transport de chaleur comprennent une plaque métallique (14, 15, 30).

5. Accumulateur de chaleur latente selon la revendication 4,
dans lequel le moyen de transport de chaleur comprend une couche thermoconductrice (22, 23 ; 28, 29) qui est posée sur la plaque métallique (14, 15, 30) et qui est conçue pour remplir les inclusions d'air entre la plaque métallique et un élément d'accumulateur de chaleur latente.

6. Accumulateur de chaleur latente selon l'une des revendications précédentes,
dans lequel les moyens de transport de chaleur sont reliés électriquement et sont appuyés les uns contre les autres au moyen d'au moins un, plus particulièrement au moyen de trois supports électroconducteurs (34, 35, 36).

7. Accumulateur de chaleur latente selon l'une des revendications précédentes,
dans lequel au moins deux moyens de transport de chaleur de l'accumulateur de chaleur latente (10 ; 10.1) sont conçus pour être reliés électriquement avec un conducteur électrique (12, 12.1, 12.2) dont la chaleur doit être évacuée à l'aide de l'accumulateur de chaleur latente.

8. Accumulateur de chaleur latente selon l'une des revendications précédentes,
qui comprend plusieurs paires d'éléments d'accumulateur de chaleur latente (26, 27 ; 32, 33) qui sont disposés chacun entre deux moyens de transport de chaleur.

9. Accumulateur de chaleur latente selon l'une des revendications précédentes,
dans lequel les éléments d'accumulateur de chaleur latente (26, 27 ; 32, 33) comprennent au moins deux composants de matériaux, dont les parts sont ajustées de façon à ce que les éléments d'accumulateur de chaleur latente présentent un état gélifié à une température de service.

10. Connecteur enfichable (38), plus particulièrement prise de charge, avec au moins un conducteur électrique (12), qui est relié avec un accumulateur de chaleur latente selon l'une des revendications précédentes, au niveau d'une interface d'entrée et au niveau d'une interface de sortie, de façon à ce que la chaleur provenant du conducteur électrique (12) soit évacuée dans l'accumulateur de chaleur latente (10 ; 10.1), dans lequel l'interface d'entrée et/ou de sortie est conçue comme une liaison par emmanchement ou une liaison vissée entre le conducteur électrique au niveau d'une interface d'entrée et au niveau d'une interface de sortie et respectivement un des moyens de transport de chaleur.

Figur 1

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3433904 B1
- DE 102009040147 A1
- DE 202020002915 U1